# EUROPEAN PATENT SPECIFICATION

(11) **EP 2 224 189 B1**
(45) Date of publication and mention of the grant of the patent: **06.12.2017**
(21) Application number: 10250349.7
(22) Date of filing: 26.02.2010
(51) Int. Cl.: F25B 30/02, F24D 11/02, F25B 13/00

(54) **Water circulation system associated with refrigerant cycle**
Wasserzirkulationssystem im Zusammenhang mit Kühlkreislauf
Système de circulation d'eau associé à un cycle de réfrigération

(30) Priority: 26.02.2009 KR 20090016268
(43) Date of publication of application: 01.09.2010
(73) Proprietor: LG Electronics Inc., Seoul (KR)
(72) Inventor: Han, Wang Kuk, Changwon City Gyoungsangnam-do, 641-711 (KR)
(74) Representative: Boult Wade Tennant

(56) References cited:
- EP-A2- 2 151 633
- GB-A- 1 504 395
- US-A- 4 055 963
- US-A- 4 191 023
- US-A- 4 308 042
- US-A- 4 553 401
- US-A- 5 239 838
- US-A- 5 320 166
- US-B1- 6 289 685

## Description

### BACKGROUND

The present disclosure relates to a water circulation system associated with a refrigerant cycle.

In a typical cooling/heating system, heating/cooling is performed by an air conditioner using a refrigerant cycle and warm/hot water supplying is performed by a boiler having a separate heating source.

That is, the air conditioner includes an outdoor unit installed at an outdoor side and an indoor unit installed at an indoor side. The outdoor unit includes a compressor compressing a refrigerant, an outdoor heat exchanger for heat-exchange between the refrigerant and outdoor air, and an expansion unit for expanding the refrigerant. The indoor unit includes an indoor heat exchanger for heat-exchange between the refrigerant and indoor air. At this point, one of the indoor and outdoor heat exchangers functions as a condenser and the other functions as an evaporator so that the compressor, out door heat exchanger, condensing unit, and indoor heat exchanger perform a refrigerant cycle.

Further, the boiler generates heat using oil, gas or electricity to heat water, thereby supplying the warm/hot water or performing the floor heating.

US5320166A discloses a heat pump system in which a vapor compression refrigerant is isolated from the space being conditioned. Heat pumped by the refrigeration circuit is stored and a heat transfer fluid circuit is controlled for conditioning the space and for conducting heat from a heat storage medium at times when the refrigeration circuit does not operate in a regular heat pumping mode.

US4553401A discloses a reversible mode heating and cooling system including a frost preventative or defrost system for an auxiliary heat exchange coil deriving its thermal energy from the hot refrigerant in the compressor discharge.

US5239838A discloses an apparatus and method for exchanging heat energy between a refrigeration circuit and a hot water system utilizing a solar heated water tank or a conventional water heater.

### SUMMARY OF THE INVENTION

Embodiments provide a water circulation system associated with a refrigerant cycle, which can stably maintain not only a water supplying performance but also a heating performance even in an extreme cold front area.

Embodiments also provide a water circulation system associated with a refrigerant cycle, which is configured to a prevent breakdown of a heating apparatus. According to the invention a water circulation and refrigerant cycle system according to claim 1 includes: an outdoor unit including a compressor for compressing the refrigerant, an outdoor heat exchanger for heat exchange between the refrigerant and outdoor air, and an expansion unit for expanding the refrigerant; a water-heat exchange indoor unit for heat exchange between the refrigerant and water, the water-heat exchange indoor unit being connected to the compressor and the expansion unit to define the refrigerant circuit; a hot water supply unit the water passing through the indoor heat exchanger; a heating unit for heating the indoor air using the water passing through the indoor heat exchanger; and a heating apparatus that is connected to a side of the refrigerant circuit to heat the refrigerant, wherein the heating apparatus includes a water-refrigerant heat exchanger for heat exchange between the refrigerant and the water; a water heating unit for heating the water passing through the water-refrigerant heat exchanger; a pump for allowing the heated water to forcedly flow; and a heating tank for storing the heated water.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a view of a water circulation system associated with a refrigerant cycle according to an embodiment;
FIG. 2 is a view of an outdoor unit of the water circulation system of FIG. 1;
FIG. 3 is a view of a heat recovery unit of the water circulation system of FIG. 1;
FIG. 4 is a view illustrating a water-heat exchange indoor unit, hot water supply unit, and heating unit of the water circulation system associated with the refrigerant cycle of FIG. 1;
FIG. 5 is a view of a heating unit of the water circulation system associated with the refrigerant cycle of FIG. 1;
FIG. 6 is a perspective view of a heating unit of the water circulation system associated with the refrigerant cycle of FIG. 1;
FIG. 7 is an exploded perspective view of the heating unit of FIG. 6;
FIG. 8 is a partial cross-sectional view of a discharge structure of the water circulation system associated with the refrigerant cycle of FIG. 1.

### DETAILED DESCRIPTION OF THE INVENTION

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the scope of the invention. To avoid detail not necessary to enable those skilled in the art to practice the invention, the description may omit certain information known to those skilled in the art. The following detailed description is, therefore, not to be taken in a limiting sense, and the scope of the present invention is defined only by the appended claims.

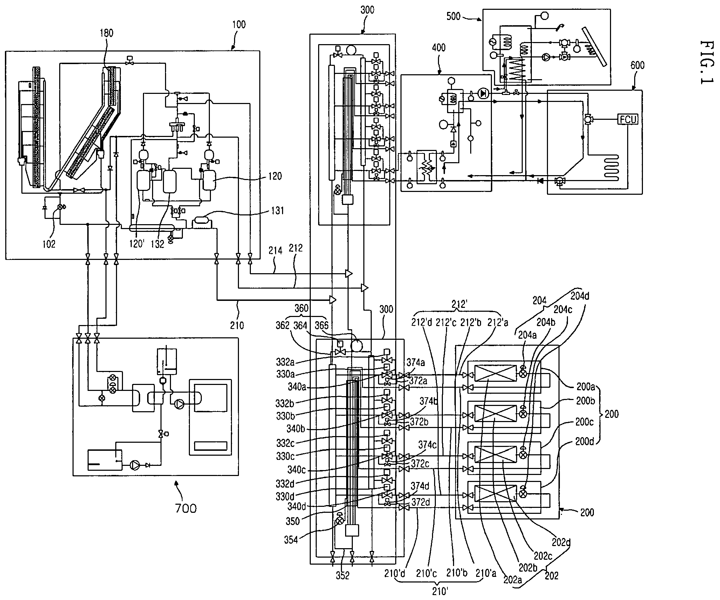

FIG. 1 is a view of a water circulation system associated with a refrigerant cycle according to an embodiment.

Referring to FIG. 1, a water circulation system of an embodiment includes at least one outdoor unit 100 having an outdoor heat exchanger 180, a plurality of air conditioning indoor units 200 for heat exchange between a refrigerant and indoor air for heating an indoor space, a water-heat exchange indoor unit 400 for heating water through heat exchange between the refrigerant and the water, a hot water supply unit 500 that is connected to the water-heat exchange indoor unit 400 to supply the warm/hot water, a heating unit 600 having a water piper extending from the water-heat exchange indoor unit 400, a heating apparatus 700 for heating the refrigerant, and a heat recovery unit 300 that is installed between the outdoor unit 100, air conditioning indoor units 200, and water-heat exchange indoor unit 400 to control flow of the refrigerant.

At this point, the outdoor heat exchanger 180 and the indoor heat exchanger 202 together with compressors 120 and 120' compressing the refrigerant to a high temperature/high pressure and an expansion unit for expanding the refrigerant define a refrigerant cycle. The expansion unit may be at least one of an outdoor linear expansion valve 102, an expansion valve 204, and a heating expansion valve 152 in accordance with an operational mode such as a cooling mode and a heating mode. The refrigerant varies in a variety of phases while flowing along the refrigerant cycle.

The water circulation system associated with the refrigerant cycle may operate to selectively or simultaneously perform the hot water supply and the floor heating. In addition, the water circulation system may operate such that the air conditioning indoor units 200 simultaneously or partly perform the cooling/heating operation.

In addition, the heating apparatus 700 is designed to enhance the heating efficiency by selectively heating the refrigerant in the heating mode in the extreme cold front area.

The outdoor unit 100 is generally installed at an outdoor side and includes the constant speed compressor 120, the inverter compressor 120' that is a variable speed heat pump, an accumulator 132, the outdoor heat exchanger 180, and the linear expansion valve.

Further, the air conditioning indoor unit 200 is installed in an indoor space of a building to control the indoor air by directly discharging the air to the indoor space.

Disposed between the outdoor unit 100 and the heat recovery unit 300 are a liquid pipe 210 that is a single pipe along which a liquid-phase refrigerant flows, a high pressure gas pipe 214 along which a high pressure gas-phase refrigerant flows, and a low pressure gas pipe 212 along which a low pressure gas-phase refrigerant flows.

The air conditioning indoor units 200 are provided with an indoor liquid pipe 210' along which the liquid-phase refrigerant flows and an air conditioning indoor gas pipe 212' along which the gas-phase refrigerant flows. The indoor liquid pipe 210' and the air conditioning indoor gas pipe 212' are installed communicating with the liquid pipe 210, high pressure gas pipe 214, and low pressure gas pipe 212.

The air conditioning indoor units 200 may have different properties and structures. Accordingly, Diameters of the indoor liquid pipe 210' and the air conditioning indoor gas pipe 212' may vary depending on a capacity of the air conditioning indoor unit 200 connected thereto.

That is, the air conditioning indoor units 200 include a first air conditioning unit 200a, a second air conditioning unit 200b, a third air conditioning unit 200c, and a fourth air conditioning unit 200d. First, second, third, and fourth air conditioning indoor gas pipes 212'a, 212'b, 212'c, and 212'd are respectively connected to the first air conditioning unit 200a, second air conditioning unit 200b, third air conditioning unit 200c, and fourth air conditioning unit 200d to guide the flow of the refrigerant. First, second, third, and fourth air conditioning indoor liquid pipes 210'a, 210'b, 210'c, and 210'd are further respectively connected to the first air conditioning unit 200a, second air conditioning unit 200b, third air conditioning unit 200c, and fourth air conditioning unit 200d to guide the flow of the refrigerant.

The air conditioning indoor units 200, indoor liquid pipes 210', and air conditioning indoor gas pipes 212' may have different sizes and capacities.

Meanwhile, the expansion valves 204 provided on the air conditioning indoor units 200 controls the refrigerant directed to the respective indoor heat exchangers 202. That is, the first air conditioning indoor unit 200a includes a first indoor heat exchanger 202a and a first expansion valve 204a and the second air conditioning indoor unit 200b includes a second indoor heat exchanger 202b and a second expansion valve 204b. In addition, the third air condition indoor unit 200c includes a third indoor heat exchanger 202c and a third expansion valve 204c and the fourth air conditioning indoor unit 200d includes a fourth indoor heat exchanger 202d and a fourth expansion valve 204d. Therefore, the expansion valves 204 may be differently controlled depending on user's selection and adjust flow rate of the refrigerant directed into the indoor heat exchangers 202.

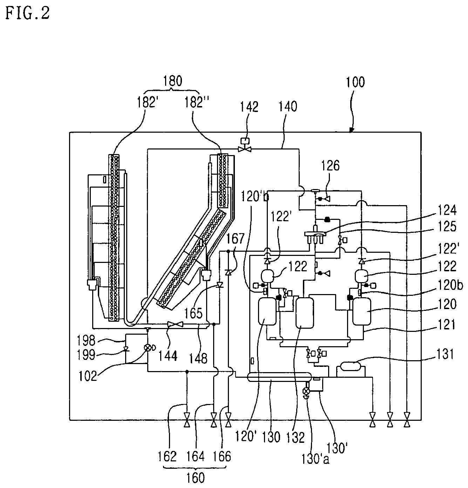

The outdoor unit will be described in more detail hereinafter with reference to FIG. 2.

FIG. 2 is a view of the outdoor unit of the water circulation system of FIG. 1.

A fluid equalizing pipe 121 is installed between the constant speed compressor 120 and the inverter compressor 120' to connect the constant speed compressor 120 to the inverter compressor 120'. Accordingly, when there is a shortage of fluid supply in one of the compressors 120 and 120', the other of the compressors 120 and 120' compensates for the shortage of the fluid to prevent the damage of the compressors 120 and 120', which may be caused by the shortage of the fluid supply.

Scroll compressors that have low noise and excellent efficiency are used as the compressors 120 and 120'. Especially, the inverter compressor 120' may be an inverter scroll compressor whose RPM is adjusted depending on a load capacity. Therefore, when the number of the air conditioning indoor units 200 operating is small and thus the load capacity is small, the inverter compressor 120' first operates. In this state, when the load capacity is gradually increased and thus the inverter compressor 120' cannot afford the increased load capacity, the constant speed compressor 120 additionally operates.

Compressor discharge temperature sensors 120b and 120'b for measuring a temperature of the refrigerant discharged from the compressors 120 and 120' and an oil separator 122 are provided at outlet sides of the constant speed compressor 120 and the inverter compressor 120'. The oil separator 122 separates oil from the refrigerant discharged from the compressors 120 and 120' and recovers the separated oil to the compressors 120 and 120;.

That is, in order to dissipate frictional heat generated when the compressors 120 and 120' operate, the oil together with the refrigerant is discharged through outlets of the compressors 120 and 120'. The oil contained in the refrigerant is separated from the refrigerant by the oil separator 122 and returned to the compressors 120 and 120'.

A backflow prevention valve 122' is further installed on the outlet side of the oil separator 122 to prevent the refrigerant from flowing back. That is, when only one of the constant speed compressor 120 and the inverter compressor 120' operates, the backflow prevention valve 122' prevents the compressed refrigerant from flowing back toward the other of the compressors 120 and 120'.

The oil separator 122 is designed to communicate with a four-way valve 124 through a pipe. The four-way valve 124 is installed to switch a flow direction of the refrigerant depending on the operation mode. Four ports of the four-way valve 124 are respectively connected to an outlet (or the oil separator) of the compressors 120 and 120' and an inlet (or the accumulator) of the compressors 120 and 120', the outdoor heat exchanger 180, and the air conditioning indoor unit 200.

Therefore, the refrigerants discharged from the compressors 120 and 120' are collected together and directed into the four-way valve 124.

Meanwhile, a hot gas pipe 125 for directly directing a part of the refrigerant, which is being introduced into the four-way valve, to the accumulator 132 is disposed across the four-way valve 124.

When there is a need to increase pressure of the low pressure refrigerant introduced into the accumulator 132, the hot gas pipe 125 allows the high pressure refrigerant of the outlet side to be directly supplied to the inlet side of the compressors 120 and 120'.

A high pressure sensor 125 is provided above the hot gas pipe 125. The high pressure sensor 125 is for measuring pressure of the refrigerant compressed in the compressors 120 and 120'. That is, the high pressure sensor 126 allows the heat pump refrigerant cycle to compare the pressure of the refrigerant with a preset target pressure for improving the heat-exchange efficiency.

Accordingly, the high pressure sensor 126 cooperates with a bypass valve 142 that will be described hereinbelow. That is, when the pressure of the refrigerant measured by the high pressure sensor 126 is less than the target pressure, the bypass valve 142 is opened to increase the pressure of the refrigerant.

An outdoor over-cooler 130 is provided at the outlet side of the outdoor heat exchanger 180. The outdoor over-cooler 130 further cools the refrigerant heat-exchanging by the outdoor heat exchanger 180. The outdoor over-cooler 130 is located at a certain location of the liquid pipe 210.

The outdoor over-cooler 130 is formed with a dual-pipe. That is, the outdoor over-cooler 130 includes an inner pipe (not shown) communicating with the liquid pipe 210 and an outer pipe (not shown) communicating with a reverse transfer pipe 120' and disposed around the inner pipe.

Meanwhile, the reverse transfer pipe 130' communicates with the liquid pipe 210 formed at the outlet of the outdoor over-cooler 130. The reverse transfer pipe 130' functions to allow the refrigerant discharged from the outdoor heat exchanger 180 and flowing through the liquid pipe 210 to reversely flow to the outer pipe (not shown).

An over-cooling expansion valve 130'a for converting the liquid-phase refrigerant into a low temperature gas-phase refrigerant by expanding the liquid-phase refrigerant is installed on the reverse transfer pipe 130'. The over-cooling expansion valve 130'a adjusts an amount of the refrigerant reversely flowing through the reverse transfer pipe 130'.

Accordingly, the refrigerant passing through the outdoor over-cooler 130 is adjusted to a desired temperature. That is, as the amount of the refrigerant reversely flowing through the reverse transfer pipe 130' increases, the temperature of the refrigerant passing through the outdoor over-cooler 130 is reduced.

By the above-described structure, when a part of the refrigerant discharged from the outdoor over-cooler 130 is introduced into the reverse transfer pipe 130', the refrigerant is converted into the low temperature gas-phase refrigerant by expanding through the over-cooling expansion valve 130'a. The low temperature gas-phase refrigerant flows reversely through the outer pipe (not shown) of the outdoor over-cooler 130 and heat-exchanges with the liquid-phase refrigerant flowing along the inner pipe (not shown), thereby further cooling the liquid-phase refrigerant.

As described above, the liquid-phase refrigerant discharged from the outdoor heat exchanger 180 is further cooled by heat conduction through the outdoor over-cooler 130 and supplied to the air conditioning indoor unit 200. The reverse refrigerant discharged from the outer pipe of the outdoor over-cooler 130 is supplied to the compressors 120 and 120' through the accumulator 132.

A drier 131 is installed at a side of the outdoor over-cooler 130, i.e., at a side of the liquid pipe 210 along which the refrigerant discharged from the outdoor heat exchanger 180 is guided. The drier 131 functions to remove moisture from the refrigerant flowing along the liquid pipe 210.

The accumulator 132 is disposed between the constant speed compressor 120 and the inverter compressor 120'. The accumulator 132 filters off the liquid-phase refrigerant to allow only the gas-phase refrigerant to be introduced into the compressors 120 and 120'.

That is, among the refrigerant introduced from the air conditioning indoor unit 200, if the liquid-phase refrigerant that is not evaporated is directly introduced into the compressors 120 and 120', the load of the compressors 120 and 120' increases, thereby damaging the compressors 120 and 120'.

Accordingly, since a weight of the liquid-phase refrigerant among the refrigerant introduced into the accumulator 132 is relatively greater than the gas-phase refrigerant, the liquid-phase refrigerant is stored at a lower portion of the accumulator 132 and only the gas-phase refrigerant at an upper portion of the accumulator 132 is introduced into the compressors 120 and 120'.

The outdoor heat exchanger 180 is provided in the outdoor unit 100. The outdoor heat exchanger 180 allows the refrigerant flowing therein to heat-exchange with the external air. The outdoor heat exchanger 180 includes a vertical portion 182' that is elected at a right angle with respect to a ground for the heat exchange between the refrigerant flowing along the outdoor heat exchanger 180 and the external air and an inclined portion 182" inclined rightward from the vertical portion 182' at a predetermined angle.

A cooling-only pipe 198 is provided at a lower portion of the outdoor heat exchanger 180. The cooling-only pipe 198 is designed to guide the flow of the refrigerant in the cooling mode of the heat pump refrigerant cycle. A first check valve 199 for preventing the refrigerant flowing backward is provided at a side of the cooling-only pipe 198.

The bypass pipe 140 is provided between the outdoor heat exchanger 180 and the four-way valve 124. The bypass pipe 140 is configured to selectively supply the high temperature/high pressure refrigerant into the outdoor heat exchanger 180. A bypass valve 142 for selectively checking the bypass pipe 140 at a side of the bypass pipe 142.

In more detail, when the water circulation system associated with the refrigerant cycle operates in a defrosting mode or operates in the heating mode after leaving without operation for long time, the pressure of the refrigerant compressed by the compressors 120 and 120' and measured by the high pressure sensor 126 is less than the target pressure and thus the refrigerant compressed by the compressors 120 and 120' bypasses toward the lower portion of the outdoor heat exchanger 180 through the bypass pipe 140.

At this point, the target pressure may vary depending on an indoor heating load, indoor cooling load, and hot water supply load of the air conditioning indoor unit 200, hot water supply unit 500, and heating unit 600.

In addition, a bypass guide valve 144 is provided under the outdoor heat exchanger 180 to block the refrigerant flow direction so that the refrigerant is directed into the outdoor heat exchanger 180 through the bypass pipe 140.

The bypass guide valve 144 communicates with the bypass pipe 1400 and is installed at a side of the outdoor discharge pipe 148 guiding the refrigerant discharged from the outdoor heat exchanger 180 to the four-way valve.

Accordingly, when the bypass guide valve 144 is closed and the bypass valve 142 is opened to direct a part of the refrigerant discharged from the compressors 120 and 120' into the outdoor discharge pipe 148 through the bypass pipe 140, the refrigerant cannot be directed to the four-way valve 124 but introduced into the outdoor heat exchanger 180.

A refrigerant heating pipe 160 for guiding the flow of the refrigerant between the outdoor unit 100 and the heating apparatus 700 is provided between the outdoor unit 100 and the heating apparatus 700. In addition, the refrigerant heating pipe 160 is connected between the outdoor linear expansion valve 102 and the outdoor over-cooler 130 and communicates with the outdoor discharge pipe 148.

That is, the refrigerant heating pipe 160 includes a first refrigerant pipe 162 for guiding the refrigerant between the outdoor linear expansion valve 102 and the outdoor over-cooler 130 to the heating apparatus 700, a second refrigerant pipe 164 for guiding the refrigerant from the outdoor discharge pipe 148 to the heating apparatus 700, and a third refrigerant pipe 166 for guiding the refrigerant from the heating apparatus 700 to the outdoor discharge pipe 148.

In addition, second and third check valves 165 and 167 are provided on the outdoor discharge pipe 48 and a side of the third refrigerant pipe 166, respectively.

In addition, second and third check valves 165 and 167 are respectively provided at sides of the outdoor discharge pipe 148 and the third refrigerant pipe 166 to control a flow direction of the refrigerant.

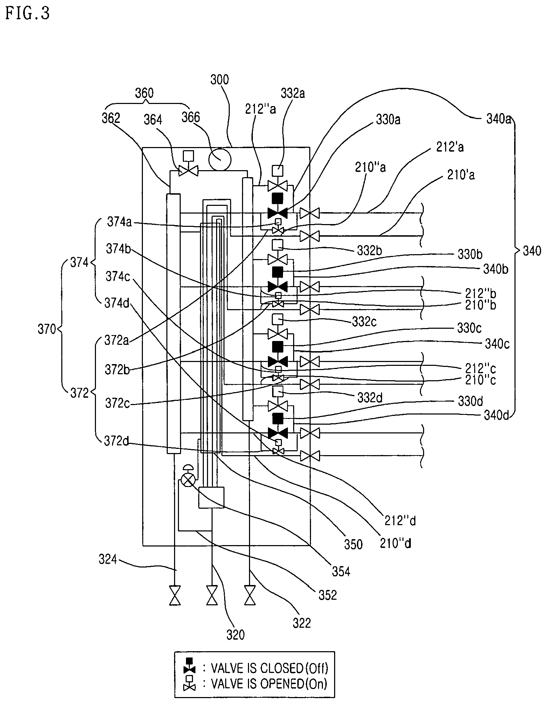

The following will describe the heat recovery unit with reference to FIG. 3.

FIG. 3 is a view of the heat recovery unit of the water circulation system of FIG. 1.

Referring to FIG. 3, the heat recovery unit 300 includes first and second heat recovery units that are respectively disposed between the outdoor unit 100 and the air conditioning indoor unit 200 and between the outdoor unit 100 and the water-heat exchange indoor unit 400. The first and second heat recovery units are connected to each other.

Accordingly, the heat recovery unit 300 allows the refrigerant to be directed to the water-heat exchange indoor unit 400 and the air conditioning indoor unit 200 by controlling the flow direction of the refrigerant, thereby enabling the air conditioning indoor unit 200 to operate in the heating and cooling modes. That is, the refrigerant is divided by the heat recovery unit 300 and directed to at least one of the water-heat exchange indoor unit 400 and the air conditioning indoor unit 200.

A liquid connection pipe 320, high pressure connection pipe 322, and low pressure connection pipe 324 are respectively connected to the liquid pipe 210, high pressure gas pipe 213, and low pressure gas pipe 212 at a side of the heat recovery unit 300.

That is, the liquid connection pipe 320 is connected to the liquid pipe 210 and the high pressure connection pipe 322 is connected to the high pressure gas pipe 214. In addition, the low pressure connection pipe 324 is connected to the low pressure gas pipe 212.

An indoor connection gas pipe 212" and indoor connection liquid pipe 210" that are respectively connected to the air conditioning indoor gas pipe 212' and the indoor liquid pipe 210' are provided on the heat recovery unit 300 to guide the flow of the refrigerant.

A plurality of main valves 330 and a plurality of sub-valves 332 that are bypass valves are installed on the indoor connection gas pipe 212" . That is, as shown in FIG. 3, a first main valve 330a is installed on a first indoor connection gas pipe 212"a connected to the first air conditioning indoor gas pipe 212'a of the first air conditioning indoor unit 200a and a second main valve 330b is installed on a second indoor connection gas pipe 212"b connected to a second air conditioning indoor gas pipe 212'b of the second air conditioning indoor unit 200b.

In addition, a third main valve 330c is installed on a third indoor connection gas pipe 212"c connected to the third air conditioning indoor gas pipe 212'c of the third air conditioning unit 200c and a fourth main valve 330d is installed on a fourth indoor connection gas pipe 212"d connected to the fourth air conditioning indoor gas pipe 212'd of the fourth air conditioning indoor unit 200d.

Accordingly, when the water circulation system associated with the refrigerant cycle operates in the cooling or heating mode, the main valves 330a, 330b, 330c, and 330d and the sub-valves 332a, 332b, 332c, and 332d are selectively opened. In the cooling/heating mode conversion, all of the main valves 330a, 330b, 330c, and 330d and all of the sub-valves 332a, 332b, 332c, and 332d are closed for a predetermined time, for example, for about 2-3 minutes.

This is to reduce colliding impact between the high pressure refrigerant and the low pressure refrigerant when the flow direction of the refrigerant changes in the cooling/heating mode conversion.

Meanwhile, branch pipes 340 are branched off from the indoor connection gas pipes 212" in the heat recovery unit 300. That is, a first branch pipe 240a is branched off from the first indoor connection gas pipe 212"a and the first sub-valve 332a is installed on the first branch pipe 240a to control the refrigerant passing through the first branch pipe 340a.

Second, third, and fourth branch pipes 340b, 340c, and 340d are respectively branched off from the second, third, and fourth indoor connection gas pipes 212"b, 212''c, and 212"d and second, third, and fourth sub-valves 332, 332c, and 332d are respectively provided on the second, third, and fourth branch pipes 340b, 340c, and 340d.

The branch pipes 340 are connected to the high pressure connection pipe 322. That is, each of the branch pipes 340 has a first end connected to the indoor connection gas pipe 212" and a second end connected to the high pressure gas pipe 214. Accordingly, when the sub-valves 332 are opened, the air conditioning indoor gas pipe 212' is connected to the high pressure gas pipe 214.

The heat recovery unit 300 further includes a simultaneous over-cooler 350. The simultaneous over-cooler 350 operates in the case where the heating and cooling are simultaneously performed, thereby further improving the cooling efficiency. The simultaneous over-cooler 350 is connected to the liquid pipe 210 and formed of a dual-pipe so that the refrigerant flowing along the liquid pipe 210 is further cooled.

Although not shown in the drawings, the liquid pipe 210 in the simultaneous over-cooler 350 may be spirally formed to improve the cooling speed and efficiency.

A detour pipe 352 branched off from the liquid pipe 210 is further formed at a lower portion of the simultaneous over-cooler 350. An over-cooling adjusting valve 354 is provided on the detour pipe 352. The over-cooling adjusting valve 354 is opened in the cooling/heating simultaneous operation, thereby further cooling the refrigerant flowing along the liquid pipe 210. That is, the gas/liquid-phase refrigerant flowing along the liquid pipe 210 is cooled by the simultaneous over-cooler 350 and thus fully phase-changed into the liquid-phase refrigerant.

A condensed liquid removing unit 360 is further provided in the heat recovery unit 300. The condensed liquid removing unit 360 includes a refrigerant connection pipe 362 connecting the high pressure gas pipe 214 to the low pressure gas pipe 212, a connection pipe opening/closing valve 364 controlling flow of the refrigerant flowing along the refrigerant connection pipe 362, and a capillary tube 366 expanding the refrigerant flowing along the refrigerant connection pipe 362.

The connection pipe opening/closing valve 364 opens the refrigerant connection pipe 362 in an all-room cooling mode (i.e., in the case where all of the air conditioning indoor units operate in the cooling mode). The refrigerant flowing along the refrigerant connection pipe 362 expands by the capillary tube 366. Accordingly, in the all-room cooling mode, the liquid-phase refrigerant condensed in the high pressure gas pipe 214 expands and is recovered to the low pressure gas pipe 212.

Meanwhile, a refrigerant detouring unit 370 is further provided in the heat recovery unit 300. The refrigerant detouring unit 370 functions to reduce the colliding impact by detouring the refrigerant when the refrigerant staying before the cooling/heating conversion of the air conditioning indoor units 200 collides with the refrigerant flowing after the cooling/heating conversion.

That is, when the high pressure refrigerant collides with the low pressure refrigerant, the refrigerant detouring unit 370 detours the refrigerant to compensate for the pressure difference, thereby reducing noise that is generated in the cooling/heating conversion.

To this end, the refrigerant detouring unit 370 includes a refrigerant detouring pipe 372 having a first end communicating with the low pressure connection pipe 324 and a second end communicating with the indoor connection gas pipe 212" and a refrigerant detouring valve 374 for selectively opening and closing the refrigerant detouring pipe 372.

In more detail, the first to fourth indoor connection gas pipes 212"a to 212"d include refrigerant detouring pipes 372a, 372b, 372c, and 372d and refrigerant detouring valves 374a, 374b, 374c, and 374d, respectively.

In the all-room cooling mode, when one of the rooms operates in the heating mode, the refrigerant detouring valves 374a, 374b, 374c, and 374d are identically opened and closed to the sub-valves 332a, 332b, 332c, and 332d.

Accordingly, the refrigerant staying in the branch pipes 340a, 340b, 340c, and 340d in the state where the sub-valves 332a, 332b, 332c, and 332d and the refrigerant detouring valves 374a, 374b, 374c, and 374d are closed in the cooling mode collides with the refrigerant that is introduced from the outdoor unit 100 into the branch pipes 340a, 340b, 340c, and 340d as the sub-valves 332a, 332b, 332c, and 332d and the refrigerant detouring valves 374a, 374b, 374c, and 374d are opened when the mode is converted into the heating mode. At this point, since a part of the refrigerant is detoured to the refrigerant detouring pipes 372a, 372b, 372c, and 372d, thereby reducing the colliding impact.

The above-described structure of the heat recovery unit 300 is applied to both of a pair of the heat recovery units shown in FIG. 1. However, since the heat recovery unit 300 located at an upper side is connected to the water-heat exchange indoor unit 400, only one of the air conditioning indoor gas pipes 212' and only one of the indoor liquid pipes 210' may be connected to the heat recovery unit 300 located at the upper side.

Needless to say, the air conditioning indoor unit 200 and the water-heat exchange unit 400 may be further connected to the rest of the air conditioning indoor units 212' and the indoor liquid pipes 210'.

The water-heat exchange indoor unit 400, the hot water supply unit 500, and the heating unit 600 are further provided at the right side of the heat recovery unit 300.

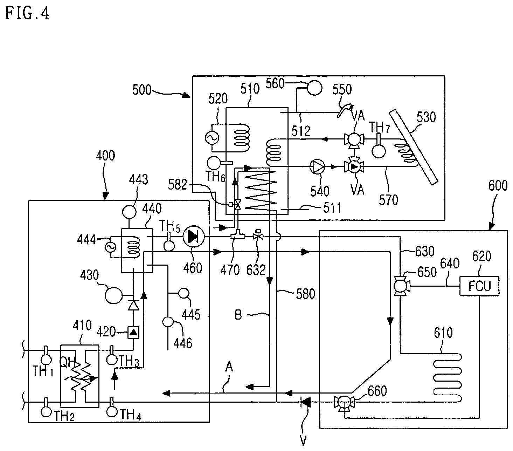

The following will describe the water-heat exchange indoor unit 400, hot water supply unit 500, and heating unit 600 in more detail with reference to FIG. 4.

FIG. 4 is a view illustrating the water-heat exchange indoor unit, hot water supply unit, and heating unit of the water circulation system associated with the refrigerant cycle.

The water-heat exchange indoor unit 400 is connected to a refrigerant pipe 402 for allowing the refrigerant discharged from the heat recovery unit 300 to be returned via the water-heat exchange indoor unit 400. The refrigerant pipe 402 passes through the water-refrigerant heat exchanger 410 for the heat exchange between the water and the refrigerant.

That is, the refrigerant pipe 402 connects the air conditioning indoor gas pipe 212' to the indoor liquid pipe 210', thereby forming a closed-circuit.

Further, temperature sensors TH1 and TH2 are provided on the refrigerant pipe 402. That is, the temperature sensors TH1 and TH2 are respectively provided on inlet and outlet sides of the water-refrigerant heat exchanger 410.

The water-refrigerant heat exchanger 410 is for the heat exchange between the refrigerant flowing along the heat pump refrigerant cycle and the water flowing along a water pipe. A plate type heat exchanger may be used as the water-refrigerant heat exchanger 410.

The water-refrigerant heat exchanger 410 receives heat from the refrigerant introduced from the heat recovery unit 300 and heats the water.

In more detail, the water passing through the hot water supply unit 500 and the heating unit 600 is not warm enough. This water is further heated by receiving the heat from the refrigerant while flowing through the water-refrigerant heat exchanger 410.

Accordingly, temperature sensors TH3 and TH4 may be respectively mounted on a water pipe near an inlet and a water pipe near an outlet of the water-refrigerant heat exchanger 410.

A flow switch 420 detecting the flow of the water is provided above the temperature sensors TH3 and TH4. An expansion tank 430 is provided above the flow switch 420.

In addition, the expansion tank 430 functions to absorb excessive expansion of the water that is heated while passing through the water-refrigerant heat exchanger 410. A diaphragm is received in the expansion tank 430 to move in response to the volume variation of the water in the water pipes. In addition, the expansion tank 430 is filled with nitrogen gas.

A heater assembly 440 is provided above the expansion tank 430. In addition, the heater assembly 440 is designed to allow the water passing through the water-refrigerant heat exchanger 410 to be heated by a sub-heater 444. The sub-heater 444 selectively operates depending on an amount of intake heat through the water-refrigerant heat exchanger 410.

An air vent 443 is formed on an upper portion of the heater assembly 440 to allow over-heated air existing in the heater assembly 440 to be discharged. A pressure gauge 445 and a relief valve 446 are provided on a side of the heater assembly 440 to properly adjust internal pressure of the heater assembly 440.

For example, when water pressure displayed on the pressure gauge 445 is excessively high, the relief valve 446 is opened to properly adjust the internal pressure of the water-heater exchange indoor unit 400.

A temperature sensor TH5 for measuring the water passing through the sub-heater is provided at a right side of the sub-heater 444.

A water pump 460 is provided at a right side of the temperature sensor TH5. The water pump 46 pumps out the water discharged through the water pipe extending from the outlet of the heater assembly 440 and supplies the water to the hot water supply unit 500 and the heating unit 600.

Meanwhile, the hot water supply unit 500 heats and supplies the water used for washing user's face, dishwashing, and the like.

A branch pipe 470 is provided at a location spaced apart from the water pump 460 in a water flow direction to selectively direct the water pumped out by the water pump 460 toward the hot water supply unit 500 and the heating unit 600.

Accordingly, a hot water supply pipe 580 is connected to an upper portion of the branch pipe 470 to guide the water to the hot water supply unit 500 and a heating pipe 630 is connected to a right side of the branch pipe 470.

In addition, a heat valve 632 and a hot water supply valve 582 are respectively provided on the heating pipe 630 and the hot water supply pipe 580.

Accordingly, the heating unit 600 and the hot water supply unit 500 selectively operate depending operation states of the hot water supply valve 582 and heating valve 630.

The hot water supply unit 500 includes a hot water supply tank 510 storing therein the water supplied from an external side and a sub-heater 520 provided in the hot water supply tank 510.

A sub-heating source for supplying heat to the hot water supply tank 510 may be added depending on an installation state. A heat accumulation unit 530 using solar energy may be used as the sub-heating source. A water inlet portion 511 through which cold water is introduced and a water outlet portion 512 through which heated water is discharged are provided on a side of the hot water supply unit 500.

In more detail, a part of the hot water supply pipe extending from the branch pipe 470 further extends to the hot water supply tank 510 and heats the water stored in the hot water supply tank 510. That is, the heat is transferred from the high temperature water flowing along the hot water supply pipe 580 to the water stored in the hot water supply tank 510.

If necessary, the sub-heating source and the sub-heater may operate together to supply additional heat. For example, when there is a need to quickly heat the water, both of the sub-heating source and the sub-heater may operate. In addition, a temperature sensor TH6 may be mounted on a side of the hot water supply tank 510.

A hot water discharging unit such as a shower unit 550 or a humidifier 560 may be connected to the water outlet portion 512. When the heat accumulation unit 530 using the solar energy is used as the sub-heating source, a heat accumulation pipe 570 extending from the heat accumulation unit 530 may be inserted into the hot water supply tank 510. A sub-pump 540 for controlling a flow rate in the heat accumulation pipe circuit is mounted on the heat accumulation pipe 570. A directional valve VA may be mounted on the heat accumulation pipe 570 to control a flow direction of the water in the heat accumulation pipe 570. A temperature sensor TH7 may be mounted on a side of the heat accumulation pipe 57.

The sub-heating source is not limited to the heat accumulation unit using the solar energy in the present invention.

Meanwhile, the heating unit 600 includes a flow heating unit 610 defined by a part of the heating pipe 630 buried in an indoor floor and an air heating unit 620 branched off from a point of the heat pipe 630 and arranged in parallel with the floor heating unit 610.

In more detail, as shown in FIG. 4, the floor heating unit 610 may be buried in the indoor floor in the form of a meander line. The air heating unit 620 may be a fan coil unit or a radiator. A part of the air heating pipe 640 branched of from the heating pipe 630 is provided on the air heating unit 620 as a heat exchanging unit. Fluid direction valves 650 and 660 such as three-way valves are installed at a portion at which the air heating pipe 640 is branched off so that the refrigerant flowing along the heating pipe 630 can be selectively directed to both or one of the floor heating unit 610 and the air heating unit 620.

An end portion of the hot water supply pipe 580 extending from the branch pipe 470 merges with a location spaced apart from an outlet end of the air heating pipe 640 in the water flow direction. Therefore, in a hot water supply mode, the refrigerant flowing along the hot water supply pipe 580 is directed to the heating pipe 630 and then to the water-refrigerant heat exchanger 410.

Here, like the location where the hot water supply pipe 580 merges with the heating pipe 630, a check valve V is installed at a location that requires the backflow prevention to prevent the water from flowing backward. Likewise, check valves may be respectively installed at an outlet end of the air heating pipe 640 and an outlet end of the floor heating unit 610 in addition to the installation of the fluid directional valve 660.

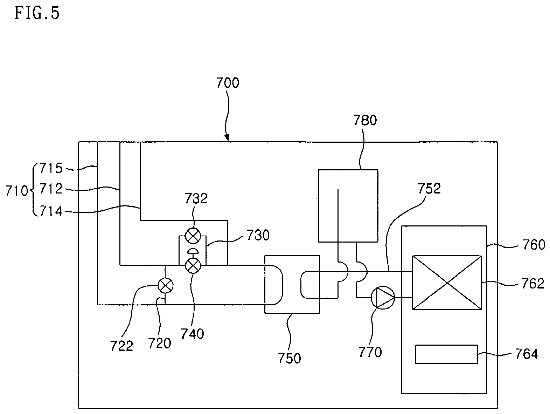

The following will describe the heating apparatus in more detail with reference to FIGS. 5 to 8.

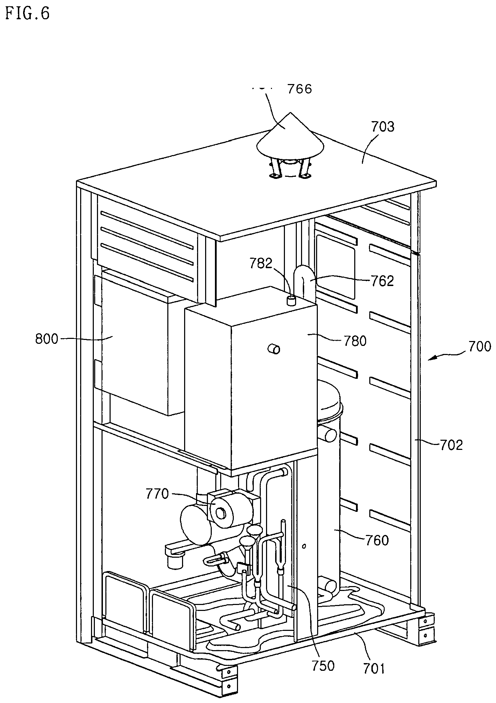

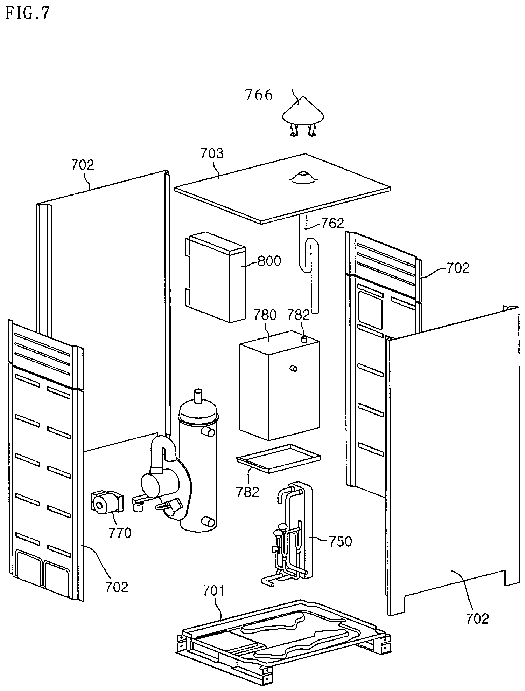

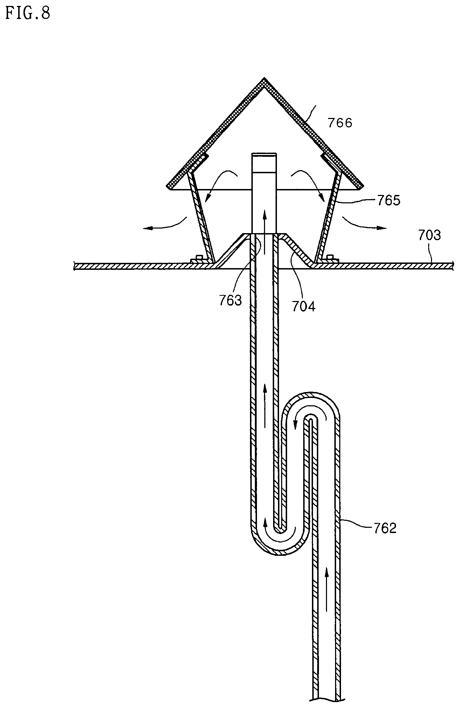

FIG. 5 is a view of a heating unit of the water circulation system associated with the refrigerant cycle of FIG. 1, FIG. 6 is a perspective view of a heating unit of the water circulation system associated with the refrigerant cycle of FIG. 1, FIG. 7 is an exploded perspective view of the heating unit of FIG. 6, and FIG. 8 is a partial cross-sectional view of a discharge structure of the water circulation system associated with the refrigerant cycle of FIG. 1.

Referring to FIG. 5, the heating apparatus 700 is connected to a side of the refrigerant circuit to selectively heat the refrigerant. A refrigerant circulation pipe 710 is provided in the heating apparatus 700.

The refrigerant circulation pipe 710 communicates with a heat pump refrigerant cycle to allow the refrigerant in the outdoor unit 100 to circulate the inside of the heating apparatus 700. That is, the refrigerant circulation pipe 710 includes a first circulation pipe 712 connected to the first refrigerant pipe 162, a second circulation pipe 714 connected to the second refrigerant pipe 164, and a third circulation pipe 715 connected to the third refrigerant pipe 166.

The second circulation pipe 714 merges with the first circulation pipe 712 in the heating apparatus 700. The first circulation pipe 712 communicates with the third circulation pipe 716. Therefore, the refrigerant directed to the first circulation pipe 712 or the second circulation pipe 714 is returned into the outdoor unit through the third circulation pipe 716.

An overheating prevention pipe 720 is provided at a side of the first circulation pipe 712. The overheating prevention pipe 720 communicates the first circulation pipe 712 with the third circulation pipe 716. An overheating prevention valve 722 is provided at a side of the overheating prevention pipe 720. The overheating prevention valve 722 selectively opens the overheating prevention pipe 720 to direct a part of the refrigerant introduced through the first circulation pipe 712 to the third circulation pipe 716, thereby preventing the overheating of the refrigerant in advance.

A recovery pipe 730 is provided at a side of the first circulation pipe 712. An opening/closing valve 732 is provided on the recovery pipe 730 to selectively allow for the flow of the refrigerant.

That is, the heating expansion valve 740 is provided under the recovery pipe 730 to expand the refrigerant when a water-refrigerant heat exchanger 750 is used as the evaporator. Accordingly, when the refrigerant is introduced through the first circulation pipe 712 in a state where the opening/closing valve 732 cuts off the recovery pipe 730, the refrigerant expands through the heating expansion valve 740.

The water-refrigerant heat exchanger 750 is provided in the heating apparatus 700. The refrigerant heat-exchanges with the water while passing through the water-refrigerant heat exchanger 750. A plate type heat exchanger for the heat exchange between the refrigerant circulating through the refrigerant circulation pipe 710 and the water may be used as the water-refrigerant heat exchanger 750.

That is, a water heating passage 752 is connected to the water-refrigerant heat exchanger 750. The water heated by the water heating unit 760 circulates the water heating passage 752. The refrigerant passing through the water-refrigerant heat exchanger 750 and the water flow separately and heat-exchanges with each other, thereby heating the refrigerant.

To this end, the water heating unit 760 is provided in the heating apparatus 700. The water heating unit 760 includes a water heating member 762 through which the water heating passage 752 passes and a heating source 764 providing heat for the water heating member 762. At this point, the heating source 764 is designed to generate heat by burning oil or gas. That is, the water heating unit 760 may operate in the same way as, for example, a boiler.

In addition, a water pump 770 is provided at a side of the water heating passage 752 to allow the water in the water heating passage 752 to forcedly circulate. Opposite ends of the water heating passage 752 communicate with the inside of the heating tank 780.

The water is stored in the heating tank 780. The water in the heating tank 780 circulates along the water heating passage 752. Therefore, the water is heated by the water heating unit 760 while flowing along the water heating passage 752. The heated water is stored in the heating tank 780, thereby accumulating heat for heating the refrigerant.

In addition, a water level detecting unit 810 for detecting a level of the water stored in the heating tank 780, a first temperature detecting unit for detecting a temperature of the water stored in the heating tank 780, and a first heater 858 for heating the water stored in the heating tank 780 are provided in the heating tank 780.

Referring to FIGS. 6 to 8, the heating apparatus 700 includes a top cover 703 forming a top appearance, four panels 702 forming a side appearance, and a base 702 disposed on a floor. The water-refrigerant heat exchanger 750, water pump 770, water heating unit 760, and heating tank 762 are installed in the heating apparatus 700.

At this point, the heating apparatus is located at an uppermost side of the water circuit including the water-refrigerant heat exchanger 750, the water pump 770, the water heating unit 760, the heating tank 762, and the water heating passage 752 connecting these components. The heating tank 762 is provided with a communication hole 782 for communicating an inner side with an outer side. The communication hole 782 is provided through the top surface of the heating tank 762.

Accordingly, when there is a shortage of the water in the components and the water heating passage 752, the water stored in the heating tank 762 is automatically directed toward the water heating passage by the self-gravity. That is, the components and the water heating passage can be always filled with the water.

In addition, when there is a shortage of the water in the heating tank 762, the water is supplied through the communication hole 782.

An electric unit for supplying electric power to the components in the heating apparatus 700 and controlling the components is provided at a side of the inside of the heating apparatus 700.

Meanwhile, a gas discharge pipe 762 for discharging gas generated when the oil or gas is burnt in the water heating unit 760 is connected to a side of the water heating unit 760. The gas discharge pipe 762 is partly bent in an S-shape. Therefore, a portion of the S-shape of the gas discharge pipe 762, which corresponds to an upper stream side based on a gas discharge direction, is located above a portion of the S-shape of the gas discharge pipe 762, which corresponds to a lower stream side.

Accordingly, even when water such as rain water is introduced into the gas discharge pipe 762, the water is collected in the bending portion of the gas discharge pipe 762 and thus the direct introduction of the water into the water heating unit 760 can be minimized.

In addition, a gas discharge opening 763 is formed on an upper end of the gas discharge pipe 762. The gas discharge opening 763 is connected to the external side through the top cover 703. At this point, the top cover 703 adjacent to the gas discharge opening 763 is inclined upward in a direction toward the gas discharge opening 763. That is, the gas discharge opening 763 is located above the top cover 703.

Accordingly, even when the water is collected on the top surface of the top cover 703, the introduction of the water into the gas discharge pipe 762 through the gas discharge opening g 763 can be minimized.

In addition, a cover 766 is installed above the gas discharge opening 763 to shield a portion right above the gas discharge opening 763. The cover 766 is fixed on the top cover 703 by a fixing unit 765. That is, since the cover 766 is fixed to the top cover 703 by the fixing unit 765, the state where the cover 766 is located above the gas discharge opening 763 is maintained.

Accordingly, the direct introduction of the water such as rain water into the gas discharge pipe 762 through the gas discharge opening 763 can be prevented by the cover 766. According to the embodiment, the hot water supply and indoor space heating can be stably realized even in the extreme cold front area and the breakdown of the heating apparatus can be prevented.

Although embodiments have been described with reference to a number of illustrative embodiments thereof, it should be understood that numerous other modifications and embodiments can be devised by those skilled in the art that will fall within the scope of the disclosure, the drawings and the appended claims. In addition to variations and modifications in the component parts and/or arrangements, alternative uses will also be apparent to those skilled in the art.

## Claims

1. A water circulation and refrigerant cycle system, comprising:
an outdoor unit (100) comprising a compressor (120, 120') for compressing the refrigerant, an outdoor heat exchanger (180) for heat exchange between the refrigerant and outdoor air, and an expansion unit (102, 204, 152) for expanding the refrigerant;
a water-heat exchange indoor unit (400) comprising a water-refrigerant heat exchanger (410)for heat exchange between the refrigerant and water, the water-refrigerant heat exchanger (410) being connected to the compressor and the expansion unit;
a hot water supply unit (500) to supply the water passing through the water-refrigerant heat exchanger (410);
a heating unit (600) for heating the indoor air using the water passing through the water-refrigerant heat exchanger (410); and
a heating apparatus (700) that is connected to the outdoor unit (100) to heat the refrigerant,
**characterized in that** the heating apparatus (700) comprises:
a working fluid-refrigerant heat exchanger (750) for heat exchange between the refrigerant and a working fluid, wherein the working fluid is water;
a working fluid heating unit (760) for heating the working fluid passing through the working fluid-refrigerant heat exchanger (750);
a pump (770) for allowing the heated working fluid to forcedly flow; and
a heating tank (780) for storing the heated working fluid;
a plurality of circulation pipes (712, 714, 715) communicating with the outdoor unit to allow the refrigerant to circulate inside of the heating apparatus, the plurality of circulation pipes including a first circulation pipe (712), a second circulation pipe (714) configured to merge with the first circulation pipe and a third circulation pipe (715) communicating with the first circulation pipe (715); and
an overheating prevention pipe (720) provided at a side of the first circulation pipe (712) and configured to communicate the first circulation pipe (712) with the third circulation pipe (715) to allow a part of the refrigerant introduced through the first circulation pipe (712) to flow into the third circulation pipe (715).

2. The system according to claim 1, wherein a communication hole for communicating an inner portion of the heating tank (780) with an outer portion of the heating tank (780) is formed through a top surface of the heating tank (780).

3. The system according to claim 2, wherein the heating tank (780) is located at an uppermost side in a working fluid circuit defined by the working fluid-refrigerant heat exchanger (750), the working fluid heating unit (760), the pump (770), and the heating tank (780) .

4. The system according to any one of claims 1 to 3, wherein the working fluid heating unit (760) generates heat for heating the working fluid by burning fuel.

5. The system according to any one of claims 1 to 4, wherein the heating apparatus is provided with a gas discharge opening (763) through which gas generated by the burning of the fuel is discharged.

6. The system according to claim 5, wherein the discharge opening (763) is formed through a top surface of the heating apparatus.

7. The system according to any one of claims 5 and 6, wherein a cover (746) is provided above the gas discharge opening (763) to prevent water from being introduced through the gas discharge opening (763).

8. The system according to any one of claims 5 to 7, wherein an outer surface of the heating apparatus adjacent to the gas discharge opening (763) is inclined upward toward the gas discharge opening (763).

9. The system according to any one of claims 5 to 8, wherein the heating apparatus is provided with a gas discharge pipe (762) connecting the working fluid heating unit to the gas discharge opening (763).

10. The system according to claim 9, wherein at least a portion of the gas discharge pipe (762) has a first portion corresponding an upper stream side with respect to a gas flow direction and a second portion corresponding to a lower stream side with respect to the gas flow direction, wherein the first portion is located above the second portion.

11. The system according to any one of claims 1 to 10, wherein the working fluid heating unit (760) comprises:
a working fluid heating member for guiding flow of the working fluid; and
a heating source (764) for generating heat for heating the refrigerant flowing along the working fluid heating member.

12. The system according to claim 11, wherein the heating source (764) generates the heat for heating the working fluid by burning fuel.

13. The system according to any one of claims 1 to 12, further comprising a refrigerant heating pipe connecting the outdoor unit to the working fluid - refrigerant heat exchanger (750).

14. The system according to claim 13, wherein the refrigerant heating pipe comprises:
a first refrigerant pipe (162) for guiding a part of the refrigerant flowing between the indoor heat exchanger and the expansion unit to the working fluid -refrigerant heat exchanger (750);
a second refrigerant pipe (164) for guiding a part of the and the compressor to the working fluid -refrigerant heat exchanger (750); and
a third refrigerant pipe (166) for guiding the refrigerant discharged from the working fluid - refrigerant heat exchanger (750)to the compressor.

15. The system according to claim 14, further comprising:
a first check valve (166) that is provided between the second refrigerant pipe (164) and the third refrigerant pipe (166) to prevent the refrigerant from being directed from the outdoor heat exchanger toward the compressor; and
a second check valve (165) that is provided on the third refrigerant pipe (166) to prevent the refrigerant from being directed from the outdoor unit to the working fluid-refrigerant heat exchanger (750).

## Patentansprüche

1. Wasserzirkulations- und Kühlkreislaufsystem, folgendes aufweisend:
eine Außeneinheit (100) aufweisend einen Kompressor (120, 120') zur Kompression des Kühlmittels, einen Außen-Wärmeaustauscher (180) zum Wärmeaustausch zwischen dem Kühlmittel und Außenluft, und eine Expansionseinheit (102, 204, 152) zur Expansion des Kühlmittels;
eine Wasser-Wärmeaustauscher-Inneneinheit (400) aufweisend einen Wasser-Kühlmittel-Wärmeaustauscher (410) zum Wärmeaustausch zwischen dem Kühlmittel und Wasser, wobei der Wasser-Kühlmittel-Wärmeaustauscher (410) mit dem Kompressor und der Expansionseinheit verbunden ist;
eine Heißwasser-Zufuhreinheit (500), zum Zuführen des Wassers, das den Wasser-Kühlmittel-Wärmeaustauscher (410) durchläuft;
eine Heizeinheit (600) zum Erwärmen der Innenluft unter Verwendung des Wassers, das den Wasser-Kühlmittel-Wärmeaustauscher (410) durchläuft; und
eine Heizvorrichtung (700), die mit der Außeneinheit (100) verbunden ist, um das Kühlmittel zu erwärmen,
**dadurch gekennzeichnet, dass** die Heizvorrichtung (700) folgendes aufweist:
einen Arbeitsfluid-Kühlmittel-Wärmeaustauscher (750) zum Wärmeaustausch zwischen dem Kühlmittel und einem Arbeitsfluid,
wobei das Arbeitsfluid Wasser ist;
eine Arbeitsfluid-Heizeinheit (760) zum Erwärmen des Arbeitsfluids, das den Arbeitsfluid-Kühlmittel-Wärmeaustauscher (750) durchläuft;
eine Pumpe (770) zum Ermöglichen eines erzwungenen Durchflusses des erwärmten Arbeitsfluids; und
einen Heiztank (780) zum Speichern des erwärmten Arbeitsfluids;
eine Vielzahl von mit der Außeneinheit kommunizierenden Zirkulationsrohren (712, 714, 715), um zu ermöglichen, dass das Kühlmittel im Inneren der Heizvorrichtung zirkuliert, wobei die Vielzahl von Zirkulationsrohren ein erstes Zirkulationsrohr (712), ein zweites Zirkulationsrohr (714), das zur Einmündung in das erste Zirkulationsrohr gestaltet ist, und ein drittes Zirkulationsrohr (715) in Kommunikation mit dem ersten Zirkulationsrohr (715) aufweist; und
ein Überhitzungsverhinderungsrohr (720), das auf einer Seite des ersten Zirkulationsrohrs (712) vorgesehen und zur Kommunikation des ersten Zirkulationsrohrs (712) mit dem dritten Zirkulationsrohr (715) gestaltet ist, um zu ermöglichen, dass ein Teil des durch das erste Zirkulationsrohr (712) eingeleiteten Kühlmittels durch das dritte Zirkulationsrohr (715) fließt.

2. System nach Anspruch 1, wobei ein Kommunikationsloch zum Kommunizieren eines inneren Abschnitts des Heiztanks (780) mit einem äußeren Abschnitt des Heiztanks (780) in einer Oberfläche oben auf dem Heiztank (780) ausgebildet ist.

3. System nach Anspruch 2, wobei der Heiztank (780) in einem Arbeitsfluid-Kreislauf, der durch den Arbeitsfluid-Kühlmittel-Wärmeaustauscher (750), die Arbeitsfluid-Heizeinheit (760), die Pumpe (770), und den Heiztank (780) definiert ist, zuoberst angeordnet ist.

4. System nach einem der Ansprüche 1 bis 3, wobei die Arbeitsfluid-Heizeinheit (760) Wärme zum Erwärmen des Arbeitsfluids durch Verbrennen von Kraftstoff erzeugt.

5. System nach einem der Ansprüche 1 bis 4, wobei die Heizvorrichtung mit einer Gas-Abströmöffnung (763) vorgesehen ist, durch die durch Verbrennen des Kraftstoffs erzeugtes Gas abgegeben wird.

6. System nach Anspruch 5, wobei die Abströmöffnung (763) in einer Oberfläche oben auf der Heizvorrichtung ausgebildet ist.

7. System nach einem der Ansprüche 5 und 6, wobei ein Deckel (746) über der Gas-Abströmöffnung (763) vorgesehen ist, um zu verhindern, dass Wasser durch die Gas-Abströmöffnung (763) eingebracht wird.

8. System nach einem der Ansprüche 5 bis7, wobei eine äußere an die Gas-Abströmöffnung (763) angrenzende Oberfläche der Heizvorrichtung nach oben in Richtung der Gas-Abströmöffnung (763) geneigt ist.

9. System nach einem der Ansprüche 5 bis8, wobei die Heizvorrichtung mit einem Gas-Abströmrohr (762) vorgesehen ist, das die Arbeitsfluid-Heizeinheit mit der Gas-Abströmöffnung (763) verbindet.

10. System nach Anspruch 9, wobei mindestens ein Abschnitt des Gas-Abströmrohrs (762) einen ersten Abschnitt, entsprechend einer Oberstromseite bezüglich einer Gasstromrichtung und einen zweiten Abschnitt entsprechend einer Unterstromseite bezüglich der Gasstromrichtung aufweist, wobei der erste Abschnitt über dem zweiten Abschnitt angeordnet ist.

11. System nach einem der Ansprüche 1 bis 10, wobei die Arbeitsfluid-Heizeinheit (760) folgendes aufweist:
ein Arbeitsfluid-Heizelement zum Lenken des Stroms des Arbeitsfluids; und
eine Heizquelle (764) zum Erzeugen von Wärme zum Erwärmen des Kühlmittels, das entlang des Arbeitsfluid-Heizelements strömt.

12. System nach Anspruch 11, wobei die Heizquelle (764) die Wärme zum Erwärmen des Arbeitsfluids durch Verbrennen von Kraftstoff erzeugt.

13. System nach einem der Ansprüche 1 bis 12, aufweisend ein Kühlmittel-Heizrohr, das die Außeneinheit mit dem Arbeitsfluid-Kühlmittel-Wärmeaustauscher (750) verbindet.

14. System nach Anspruch 13, wobei das Kühlmittel-Heizrohr folgendes aufweist:
ein erstes Kühlmittelrohr (162) zum Lenken eines Teils des zwischen dem Innen-Wärmeaustauscher und der Expansionseinheit strömenden Kühlmittels zu dem Arbeitsfluid-Kühlmittel-Wärmeaustauscher (750);
ein zweites Kühlmittelrohr (164) zum Lenken eines Teils des und dem Kompressor zu dem Arbeitsfluid-Kühlmittel-Wärmeaustauscher (750); und
ein drittes Kühlmittelrohr (166) zum Lenken des aus dem Arbeitsfluid-Kühlmittel-Wärmeaustauscher (750) abströmenden Kühlmittels zu dem Kompressor.

15. System nach Anspruch 14, weiterhin folgendes aufweisend:
ein erstes Rückschlagventil (166), das zwischen dem zweiten Kühlmittelrohr (164) und dem dritten Kühlmittelrohr (166) vorgesehen ist, um zu verhindern, dass das Kühlmittel aus dem Außen-Wärmeaustauscher in Richtung des Kompressors gelenkt wird; und
ein zweites Rückschlagventil (165), das auf dem dritten Kühlmittelrohr (166) vorgesehen ist, um zu verhindern, dass das Kühlmittel aus der Außeneinheit zu dem Arbeitsfluid-Kühlmittel-Wärmeaustauscher (750) gelenkt wird.

## Revendications

1. Système de circulation d'eau et à cycle de fluide frigorigène, comprenant :
une unité extérieure (100) comprenant un compresseur (120, 120') pour comprimer le fluide frigorigène, un échangeur de chaleur extérieur (180) pour effectuer un échange de chaleur entre le fluide frigorigène et l'air extérieur, et une unité de détente (102, 204, 152) pour détendre le fluide frigorigène ;
une unité intérieure (400) d'échange de chaleur avec l'eau comprenant un échangeur de chaleur eau-fluide frigorigène (410) pour effectuer l'échange de chaleur entre le fluide frigorigène et l'eau, l'échangeur de chaleur eau-fluide frigorigène (410) étant relié au compresseur et à l'unité de détente ;
une unité d'alimentation en eau chaude (500) pour fournir l'eau traversant l'échangeur de chaleur eau-fluide frigorigène (410) ;
une unité de chauffage (600) pour chauffer l'air intérieur en utilisant l'eau traversant l'échangeur de chaleur eau-fluide frigorigène (410) ; et
un appareil de chauffage (700) qui est relié à l'unité extérieure (100) pour chauffer le fluide frigorigène,
**caractérisé en ce que** l'appareil de chauffage (700) comprend :
un échangeur de chaleur fluide actif-fluide frigorigène (750) pour effectuer l'échange de chaleur entre le fluide frigorigène et un fluide actif, dans lequel le fluide actif est l'eau ;
une unité de chauffage de fluide actif (760) pour chauffer le fluide actif traversant l'échangeur de chaleur fluide actif-fluide frigorigène (750) ;
une pompe (770) pour permettre au fluide actif chauffé de s'écouler de manière forcée ; et
un réservoir de chauffage (780) pour stocker le fluide actif chauffé ;
une pluralité de tuyaux de circulation (712, 714, 715) communiquant avec l'unité extérieure pour permettre au fluide frigorigène de circuler à l'intérieur de l'appareil de chauffage, la pluralité de tuyaux de circulation comportant un premier tuyau de circulation (712), un deuxième tuyau de circulation (714) configuré pour fusionner avec le premier tuyau de circulation et un troisième tuyau de circulation (715) communiquant avec le premier tuyau de circulation (715) ; et
un tuyau empêchant la surchauffe (720) prévu au niveau d'un côté du premier tuyau de circulation (712) et configuré pour mettre en communication le premier tuyau de circulation (712) avec le troisième tuyau de circulation (715) afin de permettre à une partie du fluide frigorigène introduite par le premier tuyau de circulation (712) de s'écouler dans le troisième tuyau de circulation (715).

2. Système selon la revendication 1, dans lequel un orifice de communication pour mettre en communication une partie interne du réservoir de chauffage (780) avec une partie externe du réservoir de chauffage (780) est formé à travers une surface supérieure du réservoir de chauffage (780).

3. Système selon la revendication 2, dans lequel le réservoir de chauffage (780) est situé au niveau du côté le plus élevé dans un circuit de fluide actif défini par l'échangeur de chaleur fluide actif-fluide frigorigène (750), l'unité de chauffage de fluide actif (760), la pompe (770) et le réservoir de chauffage (780).

4. Système selon l'une quelconque des revendications 1 à 3, dans lequel l'unité de chauffage de fluide actif (760) génère de la chaleur pour chauffer le fluide actif par combustion de carburant.

5. Système selon l'une quelconque des revendications 1 à 4, dans lequel l'appareil de chauffage est doté d'une ouverture d'évacuation de gaz (763) à travers laquelle le gaz généré par la combustion du carburant est évacué.

6. Système selon la revendication 5, dans lequel l'ouverture d'évacuation (763) est formée à travers une surface supérieure de l'appareil de chauffage.

7. Système selon l'une quelconque des revendications 5 et 6, dans lequel un couvercle (746) est prévu au-dessus de l'ouverture d'évacuation de gaz (763) pour empêcher l'introduction d'eau à travers l'ouverture d'évacuation de gaz (763).

8. Système selon l'une quelconque des revendications 5 à 7, dans lequel une surface externe de l'appareil de chauffage adjacente à l'ouverture d'évacuation de gaz (763) est inclinée vers le haut en direction de l'ouverture d'évacuation de gaz (763).

9. Système selon l'une quelconque des revendications 5 à 8, dans lequel l'appareil de chauffage est doté d'un tuyau d'évacuation de gaz (762) reliant l'unité de chauffage de fluide actif à l'ouverture d'évacuation de gaz (763).

10. Système selon la revendication 9, dans lequel au moins une partie du tuyau d'évacuation de gaz (762) a une première partie correspondant à un côté amont par rapport à une direction d'écoulement de gaz et une deuxième partie correspondant à un côté aval par rapport à la direction d'écoulement de gaz, où la première partie est située au-dessus de la deuxième partie.

11. Système selon l'une quelconque des revendications 1 à 10, dans lequel l'unité de chauffage de fluide actif (760) comprend :
un élément de chauffage de fluide actif pour guider un écoulement du fluide actif ; et
une source de chauffage (764) pour générer de la chaleur afin de chauffer le fluide frigorigène s'écoulant le long de l'élément de chauffage de fluide actif.

12. Système selon la revendication 11, dans lequel la source de chauffage (764) génère la chaleur pour chauffer le fluide actif par combustion de carburant.

13. Système selon l'une quelconque des revendications 1 à 12, comprenant en outre un tuyau de chauffage de fluide frigorigène reliant l'unité extérieure à l'échangeur de chaleur fluide actif-fluide frigorigène (750).

14. Système selon la revendication 13, dans lequel le tuyau de chauffage de fluide frigorigène comprend :
un premier tuyau de fluide frigorigène (162) pour guider une partie du fluide frigorigène qui s'écoule entre l'échangeur de chaleur intérieur et l'unité de détente vers l'échangeur de chaleur fluide actif-fluide frigorigène (750) ;
un deuxième tuyau de fluide frigorigène (164) pour guider une partie du et du compresseur vers l'échangeur de chaleur fluide actif-fluide frigorigène (750) ; et
un troisième tuyau de fluide frigorigène (166) pour guider le fluide frigorigène évacué à partir de l'échangeur de chaleur fluide actif-fluide frigorigène (750) vers le compresseur.

15. Système selon la revendication 14, comprenant en outre :
un premier clapet anti-retour (166) qui est prévu entre le deuxième tuyau de fluide frigorigène (164) et le troisième tuyau de fluide frigorigène (166) pour empêcher le fluide frigorigène d'être dirigé de l'échangeur de chaleur extérieur vers le compresseur ; et
un deuxième clapet anti-retour (165) qui est prévu sur le troisième tuyau de fluide frigorigène (166) pour empêcher le fluide frigorigène d'être dirigé de l'unité extérieure vers l'échangeur de chaleur fluide actif-fluide frigorigène (750).
